# EUROPEAN PATENT APPLICATION

(11) **EP 1 254 643 A1**
(43) Date of publication of application: **06.11.2002**
(21) Application number: 02009783.8
(22) Date of filing: 30.04.2002
(51) Int. Cl.: A61C 8/00, A61C 13/235

(54) **Dental magnetic attachement**

(30) Priority: 01.05.2001 JP 2001134420
(71) Applicant: Aichi Steel Corporation, Tokai-shi, Aichi-Ken 476-8666 (JP)
(72) Inventor: Honkura, Yoshinobu, c/o Aichi Steel Corporation, Tokai-shi, Aichi-ken 476-8666 (JP); Arai, Kazuo, c/o Aichi Steel Corporation, Tokai-shi, Aichi-ken 476-8666 (JP)
(74) Representative: Blumbach, Kramer & Partner GbR

(57) **Abstract**

A dental magnetic attachment has been invented that can improve durability by preventing the wear of an attractive face and attracted face. The dental magnetic attachment (1) comprises a keeper embedded in a tooth root, and a magnetic assembly (4) that attracts the keeper by magnetic attract force. The magnetic assembly (4) has a yolk (42) that comprises a base part (421) and a lateral wall part (422), a permanent magnet (41), a soft-magnetic shield (43) and non-magnetic seal (44). The attractive face (401) of the magnetic assembly (4) and the attracted face (301) of the keeper (3) are coated by the wear-resistant film (6) with greater than 400Hv of Vickers hardness.

## Description

### BACKGROUND OF THE INVENTION

### Field of the art

The present invention relates to a dental magnetic attachment that comprises a keeper embedded in a tooth root and a magnetic assembly that is freely fixed to or taken off of said keeper by magnetic attractive force.

### Prior art

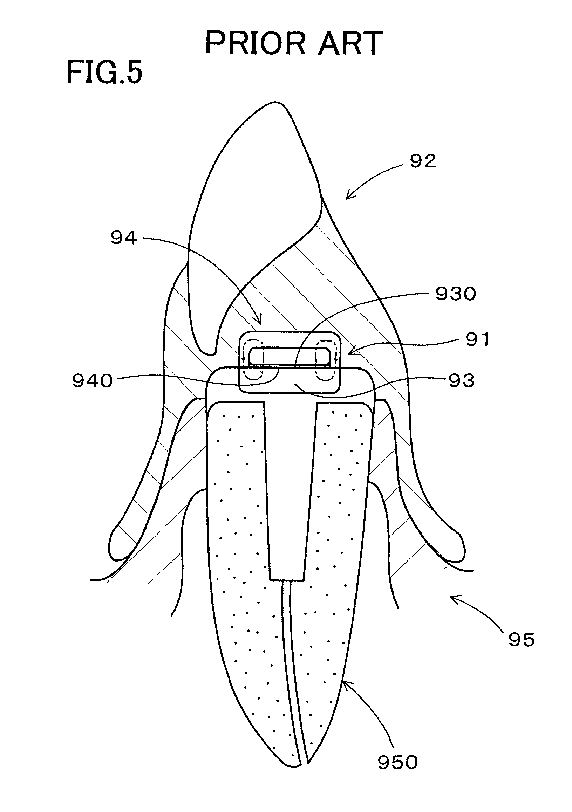

Various types of dental magnetic attachments utilizing magnetic attractive force, which can be easily fixed or taken off in the oral cavity, have been developed up to date.
For example, as shown in FIG. 5, a dental attachment 91 consists of a keeper 93 embedded in tooth root 950 in oral cavity 95 and a magnetic assembly 94 which is fixed to said keeper 93 by magnetic attractive force.

The surface of this magnetic assembly 94 has attractive face 940 that attracts said keeper 93, while the surface of said keeper 93 has an attracted face 930 that is attracted to said attractive face 940.
And by attracting said magnetic assembly 94 to said keeper 93, denture 94 is set in the oral cavity 95.

However, in the case that prior said dental attachment 91 is used for a long time, wear is generated when attractive face 940 of said magnetic assembly 94 rubs against the attracted face 930 of said keeper 93.
And if the wear becomes too great, the fit of said denture 92 will be deteriorated and comfort will be lost. It has been difficult to improve the durability of said dental attachment 91.

### SUMMARY OF THE INVENTION

Considering prior difficulties, the present invention provides a dental magnetic attachment that can improve durability by preventing the wear of the attractive face and the attracted face.

The invention of Claim 1 comprises a keeper embedded in a tooth root and a magnetic assembly that is fixed to or taken off of said keeper.
The notable point of this invention is that the attractive surface of said magnetic assembly is made of a wear-resistant film that has greater than 400 Hv of Vickers hardness.

The attractive face of magnetic assembly of said dental attachment is formed by wear-resistant film that has greater than 400 Hv of Vickers hardness. This wear-resistant film can prevent the wear that is generated between the attractive face of said magnetic assembly and the attracted face of said keeper when the two pieces rub against each other. Therefore the durability of said dental attachment is improved.

The invention set forth in Claim 2 comprises the attachment where the surface of said keeper, which contacts the attractive face of said magnetic assembly, which is preferred to be formed by wear -resistant film that has greater than 400 Hv of Vickers hardness.

The invention set forth in Claim 3 comprises the attachment where said wear-resistant film is preferred to be less than 1µm thick, which prevents the reduction of magnetic attractive force. When said film thickness is greater than 1 µ m, reduction of the magnetic attractive force may occur.
In addition, said film thickness is preferred to be greater than 0.1µm to improve the durability of said dental attachment.

### BRIEF DESCRIPTION OF THE DRAWINGS

FIG. 1 is a diagram showing a cross-sectional view of (a) a magnetic assembly and (b) a keeper in embodiment example 1.
FIG.2 is a perspective view of a magnetic assembly in embodiment example 1.
FIG.3 is a diagram showing a cross-sectional view of the denture before setting in the tooth root in embodiment example 1.
FIG.4 is a diagram showing a cross-sectional view of (a) a magnetic assembly and (b) a keeper in embodiment example 2.
FIG.5 is a diagram showing a cross-sectional view of the case that denture is set in the tooth root in oral space by prior example.

### THE PREFERRRED EMBODIMENT OF THE PRESENT INVENTION

### EXAMPLE 1

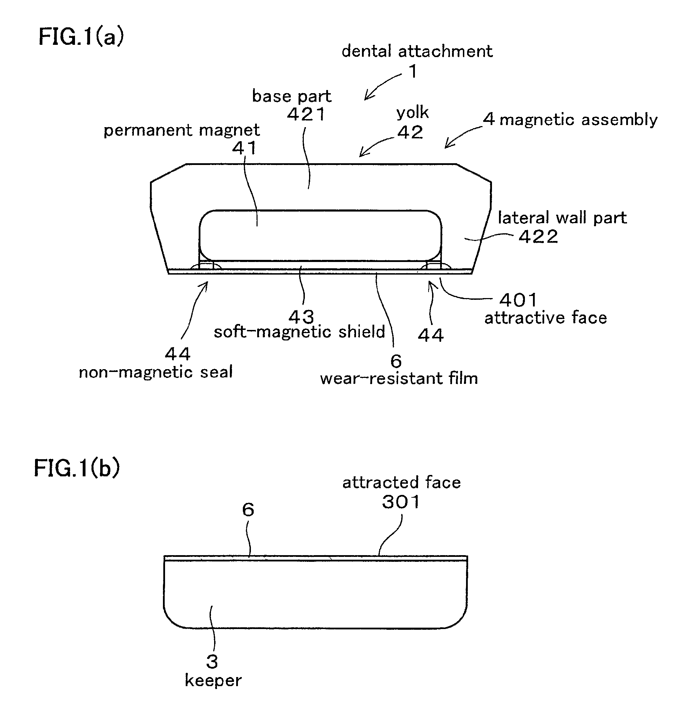

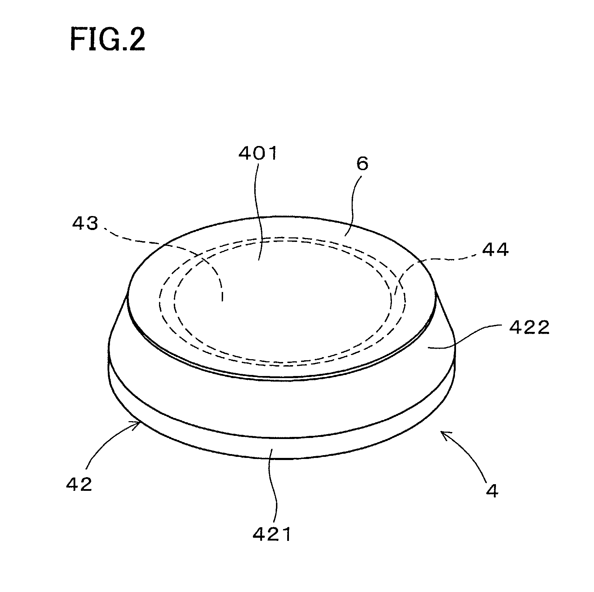

The embodiment example of this present invention, a dental attachment, is explained by FIG 1~FIG 3.
As is shown in FIG 1(a), (b), the dental attachment 1 of this example comprises a keeper 3 embedded in a tooth root 50 and a magnetic assembly 4 which is freely fixed to said keeper 3 by magnetic attractive force. The attractive face 401 of this magnetic assembly 4 and the attracted face 301 of the keeper 3 are made of wear-resistant film that has greater than 400 Hv of Vickers hardness.

The details of this are as follows.
Said magnetic assembly 4 has a yoke 42 which consists of the base part 421 and lateral wall part 422, a soft magnetic shield 43 which covers the surface of said permanent magnet 41 and non-magnetic seal 44 which is between said soft-magnet shield 43 and said yolk 42. Said attractive face 401 comprises the surface of said soft-magnetic shield 43, non-magnetic seal 44 and said yoke 42. Said wear-resistant film 6 is made of TiN film by ion plating method.

Said magnetic assembly 4, permanent magnet 41 and keeper 3 has a orbicular shape. The magnetic assembly 4 has a cap-shape structure wherein the permanent magnet 41 is capped by yolk 42.

Said wear-resistant film 6 may be made of DLC film instead of TiN film. Also, said wear-resistant film 6 may be made by sputtering method or CVD method instead of said ion plating method.
In this example, said wear-resistant film 6 is 0.6µm thick and has a 0.05 µm plane roughness index.
Furthermore, the roughness profile index is preferred to be less than 1µm.

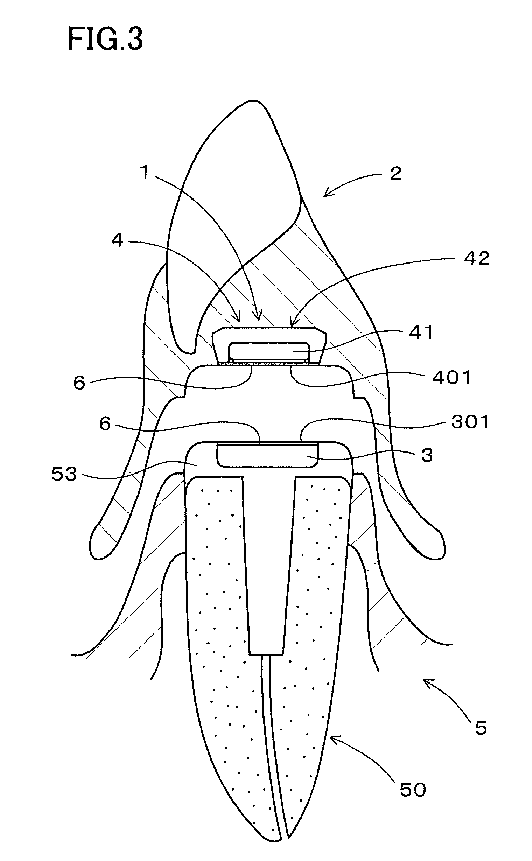

As is shown in FIG 3, said tooth root 50 consists of tooth root 51 and a root cap 53. This root cap 53 is embedded in tooth root 51 with dental cement and said keeper 3 is embedded in this root cap 53.

Said wear-resistant film 6, TiN film, which is made by ion plating method, is explained.
First, as a pre-treatment, said magnetic assembly 4 or keeper 3 is soaked in pure water, ultrasonically cleaned and grease is removed from the magnetic assembly 4 or keeper 3.
Then, the wear-resistant film 6 is made by ion plating, produced by the heating method of hollow cathode discharge (HCD) plasma ion beam method under nitrogen gas atmosphere to the target of Ti on the attractive face 401 of the magnetic assembly 4 or the attracted face 301 of the keeper 3.

Still, this ion plating can be done using titanium carbide (TiC), a target of Ti under carbon gas atmosphere, or by using alumna (Al₂ O₃ ), a target of Al under oxygen gas atmosphere.
Also, ion plating may be done using chrome-nitride (CrN), a target of Cr under nitrogen gas atmosphere.

Also, instead of making TiN film, sputtering method or chemical evaporation (CVD) method can be used in the case of making DLC (diamond like carbon) film.
In this case, as in the sputtering method, first, as a pre-treatment, said magnetic assembly 4 or keeper 3 is soaked in pure water, ultrasonically cleaned and grease is removed from the surface of this magnetic assembly 4 or keeper 3.
Then, wear-resistant film 6 is made by magnetron sputtering to the target C of the attractive face 401 of a magnetic assembly 4 or the attracted face 301 of the keeper 3, under argon gas atmosphere.

In said CVD method, also as pre-treatment, said magnetic assembly 4 or keeper 3 is soaked in pure water, ultrasonically cleaned and grease is removed from the surface of this magnetic assembly 4 or keeper 3.
Then, wear-resistant film 6 on the attractive face 401 of the magnetic assembly 4 or the attracted face 301 of the keeper 3 is made by chemical evaporation which is generated by the reaction of silicon gas, carbon gas, and hydrogen gas.

The effect of action in this example is explained as follows.
Said attractive face 401 and said attracted face 301 have a wear-resistant film 6 with greater than 400 Hv of Vickers hardness. Therefore, this wear-resistant film 6 can prevent the wear in said dental attachment 1 which is generated between the attractive face 401 of said magnetic assembly 4 and the attracted face 301 of said keeper 3 by rubbing against each other. Therefore, the durability of said dental attachment 1 is improved.

### EXAMPLE 2

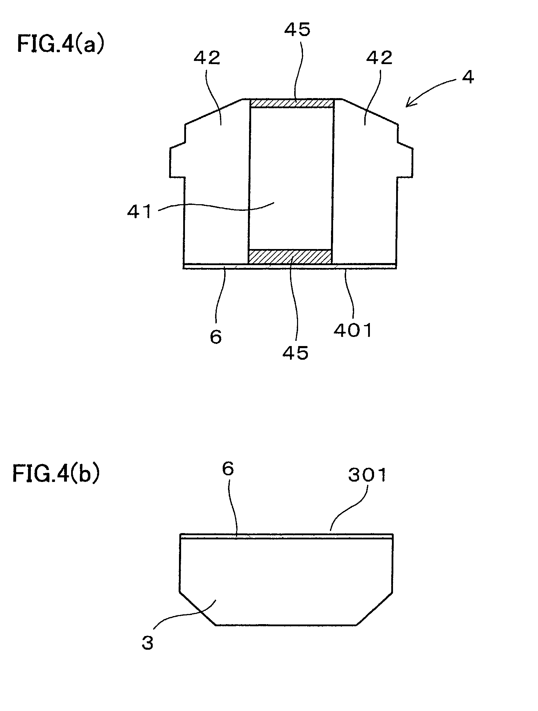

As is shown in FIG 4 (a), (b), the magnetic assembly 4 of this example has a sandwich structure that a permanent magnet 4 is sandwiched between yolk 42. the magnetic assembly 4 of this sample has a yolk 42, a permanent magnet 41 which is set in said yolk 42, and non-magnetic shield case 45 which covers the outer face of said permanent magnet 41.

The attractive face 401 which consists of said non-magnetic shield case 45 and said yolk 42 and the attracted face 301 of said keeper 3 that has said wear-resistant film 6 with greater than 400 Hv of Vickers hardness. Other properties are the same of said embodiment example 1.

Said magnetic assembly 4 may have a sandwich structure in this example. Said dental attachment 1 may also have similar effects of action as said embodiment example 1.

### EXAMPLE 3

In the dental attachment of this example, said attractive face 401 of said magnetic assembly 4 has a concave spherical shape, while attracted face 301 of said keeper 3 has a convex spherical shape to fit the concave spherical shape of the attractive face 401. Other properties are the same as said example 1.

In this example, even if an eccentric load, like a rocking load given from the side direction, is given to the denture 2, which is set on the tooth root 50 using said dental attachment 1, said dental attachment 1 can transmit said eccentric load to the sliding direction by rotating said attractive face 401 on the keeper 3, thus preventing transmission of too much eccentric load to the tooth root 50.
Other effects have the same action of said example 1.

### EXAMPLE 4

In this example, characteristic tests and estimation of the magnetic attractive force, the lifetime, and corrosion resistance are carried out on said dental attachment as well as the prior dental attachment.

### Invention 1

Said magnetic assembly 4 has a cap-shaped structure (refer to FIG.1 (a)), and an outer diameter of 4.4 mm, a height of is 1.3 mm, with an attractive face 401 outer diameter of 4 mm. Said permanent magnet 41 is made of SmCo type magnet and said yolk 42 is made of 17Cr-2Mo-0.2Ti.

Said attractive face 401 and attracted face 301 have a wear-resistant film 6 of DLC film. This wear-resistant film has 400 Hv of Vickers hardness and the thickness of the film is 0.3µ m, while the roughness profile index is 0.5µm.
Said keeper 3 is made of 17Cr-2Mo-0.2Ti, with an outer diameter of 4 mm and height of 0.8 mm.

### Invention 2

Said magnetic assembly 4 has a cap-shaped structure (refer to FIG.1 (a)), an outer diameter of 3.7 mm, a height of 1.1 mm, and an attractive face 401 outer diameter of 3.5 mm. Said permanent magnet is made of Nd type magnet and said yolk 42 is made of 19Cr-2Mo-0.2Ti.

The wear-resistant film 6 of TiN film is formed on said attractive face 401 and attracted face 301. This wear-resistant film 6 has 200Hv of Vickers hardness and the thickness of the film is 0.8µm, while roughness profile index is 0.1µm.
Said keeper 3 is made of 19Cr-2Mo-0.2Ti, the outer diameter is 3.5 mm and the height is 0.7 mm.

### Invention 3

Said magnetic assembly 4 has a sandwich-shape structure (refer to FIG. 4 (a) ), the width is 2.8 mm, the length is 3.8 mm the height is 1.8 mm. Said permanent magnet 41 is made of Nd type magnet and said yolk 42 is made of 19Cr-2Mo-.2Ti.

The wear-resistant film 6 of TiC film is formed on said attractive face 401 and attracted face 301. This wear-resistant film 6 has 400Hv of Vickers hardness and the thickness of the film is 1.0µ m, while the roughness profile index is 0.1µm.
Said keeper 3 is made of 19Cr-2Mo- 0.2Ti, the width is 2.8 mm, the length is 3.8 mm, the height is 1.8 mm.

### The previous attachment 1

Said magnetic assembly 4 has a cap-shaped structure (cf. FIG.1 (a) ), an outer diameter of 4.4 mm, a height of 1.3 mm, an attractive face 401 outer diameter of 4 mm. Said permanent magnet 41 is made of SmCo type magnet, said yolk 42 is made of 17Cr-2Mo-0.2Ti.
Said keeper 3 is made of 17Cr-2Mo-0.2Ti, the diameter is 4 mm, the height is 0.8 mm.

### The prior attachment 2

Said magnetic assembly 4 has a sandwich-shaped structure (refer to FIG. 4 (a)), the width is 2.8 mm, the length is 3.8 mm, and the height is 1.8 mm. Said permanent magnet 41 is made of Nd type magnet, said yolk42 is made of 19Cr-2Mo-0.2 Ti. This yolk 42 has a projecting part 426 on the lateral wall part 422. Said keeper 3 is made of 19Cr-2Mo-0.2Ti, the width is 2.8 mm, the length is 3.8 mm, and the height is 1.8 mm.

The results of the characteristic tests of said magnetic attractive force, lifetime, and corrosion resistance are as follows.
Herein, said magnetic attractive force is the load which is generated when said magnetic assembly 4 and the keeper 3 are pulled to the opposite direction and are separated from each other.
Said lifetime is shown as removal cycles and occluding load times.
The removal cycles show the times that said magnetic assembly 4 can be removed from said keeper 3 while remaining within 5 % decrease of the initial magnetic attractive force.

The occluding load test shows the number of occluding load in the case the wear of said attractive face 401 is less than 1µ m when said magnetic assembly 4 is attracted in the 3 degree rotating angle to a keeper 3 and then added occluding load.
Corrosion resistance test shows whether the attachment is corroded or not when said magnetic assembly4 is soaked in artificial saliva.

The evaluation of said characteristic test is shown by o's and x's; o shows that the dental attachment 1 has a good characteristic, and x shows the dental attachment 1 has a difficulty to be used.
Concretely, o shows said magnetic attractive force is above 4N and x shows under 4N.
Said removal cycles show; o is the case that the fall of the magnetic attractive force is under 5 %, and x shows above 5 %, after 5000 times removal, which is equivalent to said dental attachment 1 being removed 5 times a day and used for 3 years.

Said occluding load times test shows; o is the case that the wear of the attractive face 401 is under 1µ m and x is above 1µ m, after one million times occluding, which means the case that said dental attachment 1 is occluded 1000 times a day and used for 3 years.
Said corrosion resistance test shows; o is the case that said magnetic assembly 4 is not corroded after it is soaked in artificial saliva and x is the case of being corroded.

The result of said characteristic test and evaluation is shown as follows.
Invention 1; the magnetic attractive force is 9N and o, the removable time is ten thousand times and o, occluding load time is two million times and o, the corrosion resistance is no corrosion and o.
Invention 2; the magnetic attractive force is 4.5 N, o, removable time is twenty thousand times, o, the occluding load time is three million times, o, the corrosion resistance is o without corrosion.
Invention 3; the magnetic attractive force is 6N, o, the removable time is ten thousand times, o, the occluding load time is two million times, o, corrosion resistance is no corrosion, o.

The prior attachment 1; magnetic attractive force is 9N, o, the removable time is thousand times, x, the occluding load time is three hundred thousand times, x, corrosion resistance is x because of the corrosion.
The prior attachment 2; the magnetic attractive force is 6N, o, the removable time is one thousand times, x, the occluding load time is three hundred thousand times, x, the corrosion resistance is o without corrosion.

The result of each said characteristic test proves as follows.
Said inventions 1~3 can be used as a good dental attachment 1, because the magnetic attract force, lifetime, and corrosion resistance are all o.k., attract force is excellent, and the durability which is shown in the lifetime and the corrosion resistance is excellent, too.

On the contrary, said prior attachment 1 shows all x in the removable time, occluding load time, and corrosion resistance test, said prior attachment 2 shows x in removable time and occluding load time, so they have a difficulty to be used as a dental attachment 1.
According to the above result, the dental attachment 1 described in said embodiment example 1~3 is proved to have excellent character.

### EFFECT OF INVENTION

As is mentioned above, according to the present invention, the dental attachment, which can prevent the wear of contact faces and improve the durability, can be provided.

The embodiment of the invention in which an exclusive property or privilege is claimed are defined as follows.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

### DESCRIPTION OF REFERENCE NUMERALS

- 1...: dental attachment
- 2...: denture
- 3...: keeper
- 301...: attracted face
- 4...: magnetic assembly
- 401 ...: attractive face
- 41...: permanent magnet
- 42...: yolk
- 6...: resistance to wear film
- 44...: non-magnetic seal part
- 422...: lateral wall part
- 421...: base part

## Claims

1. The dental magnetic attachment comprising a keeper embedded in a tooth root and a magnetic assembly that can be fixed to or taken off freely from said keeper by magnetic attractive force, where the attractive face of said magnetic assembly is formed by a wear-resistant film with greater than 400 Hv of Vickers hardness.

2. The dental magnetic attachment, as set forth in Claim 1, wherein the attracted face of said keeper which fixes the attractive face of said magnetic assembly is also formed by a resistant to wear film with greater than 400 Hv of Vickers hardness.

3. The dental magnetic attachment as set forth in Claim 1 or 2, wherein the thickness of said resistant to wear film is under 1µm.
